# EUROPÄISCHE PATENTSCHRIFT

(11) **EP 0 440 859 B1**
(45) Veröffentlichungstag und Bekanntmachung des Hinweises auf die Patenterteilung: **03.11.1993**
(21) Anmeldenummer: 90102494.3
(22) Anmeldetag: 08.02.1990
(51) Int. Cl.: B65G 13/06

(54) **Antriebsrolleneinheit**
Driving roller unit
Unité de galets de propulsion

(43) Veröffentlichungstag der Anmeldung: 14.08.1991
(73) Patentinhaber: BAVARIA CARGO TECHNOLOGIE GMBH, D-80999 München (DE)
(72) Erfinder: Huber, Thomas, D-8127 Iffeldorf (DE)
(74) Vertreter: Bohnenberger, Johannes, Dr.

(56) Entgegenhaltungen:
- EP-A- 0 300 127
- DE-C- 819 063
- FR-A- 1 489 856

## Beschreibung

Die Erfindung betrifft eine Antriebsrolleneinheit zum Antrieb von Gegenständen auf einer Förderbahn, mit einer von einer Elektromotoranordnung über eine Zahnrad-Innenzahnkranz-Getriebeübertragung drehend antreibbaren Antriebsrolle, welche drehbar auf einem Führungskörper gelagert ist, mittels dem sie bezüglich einer Basis zwischen einer unteren Ruhestellung und einer oberen Antriebsstellung, in der sie mit der Unterseite des anzutreibenden Gegenstands im Eingriff steht, bewegbar ist, wobei die Antriebsrolle im wesentlichen als hohler Kreiszylinder ausgebildet ist und die Elektromotoranordnung, der Führungskörper und die Getriebe übertragung im Inneren der hohlzylindrischen Antriebsrolle angeordnet sind, wobei ferner der Führungskörper kreiszylindrische Außenumfangsflächenbereiche aufweist, auf denen die Antriebsrolle konzentrisch gelagert ist, wobei an der Innenseite der hohlzyllindrischen Antriebsrolle ein zu ihr konzentrischer Innenzahnkranz drehfest angebracht ist, und wobei der Führungskörper um eine bezüglich der Basis ortsfeste, zu seinen kreiszylindrischen Außenumfangsflächenbereichen exzentrische Drehachse drehbar gelagert ist.

Eine Antriebsrolleneinheit der vorstehend genannten Art ist bereits aus der DE-A-37 24 126 bekannt. Bei dieser Antriebsrolleneinheit ist der die Feldwicklung enthaltende Stator der Elektromotoranordnung starr und drehfest mit einem Statorgehäuse verbunden, das als Führungskörper dient, dessen kreiszylindrische Außenumfangsfläche exzentrisch zur Drehachse eines Antriebszahnrades angeordnet ist. Bei dieser Ausgestaltung verharrt beim Einschalten der Motoranordnung der im Inneren des Stators angeordnete Rotor wegen seiner Eigenträgheit zunächst im Stillstand, so daß das Motordrehmoment die Statoranordnung und damit den durch ihr Gehäuse gebildeten Führungskörper um die bezüglich der Basis ortsfeste Drehachse des mit der Innenverzahnung der Antriebsrolle kämmenden Antriebszahnrades dreht. Dadurch wird wegen der zur Drehachse des Antriebszahnrades exzentrischen Ausbildung des Führungskörpers die darauf gelagerte Antriebsrolle aus ihrer unteren Ruhestellung in die obere Arbeitsstellung bewegt, in der sie zur Anlage am Boden des darüber befindlichen zu fördernden Gegenstands gelangt.

Problematisch ist bei einer derartigen Ausgestaltung, daß sich die die Feldwicklung enthaltende Statoranordnung im Betrieb der Antriebsrolleneinheit zumindest über einen begrenzten Drehwinkel drehen muß. Zur Stromzuführung an die Feldwicklung der Statoranordnung muß daher eine recht aufwendig gestaltete Schleifringanordnung vorgesehen werden.

Eine derartige Schleifringanordnung kompliziert nicht nur den Aufbau der Antriebsrolleneinheit sondern sie neigt auch zur Verschmutzung und zur Störungsanfälligkeit, so daß kurze Wartungsintervalle erforderlich sind.

Eine weitere Antriebsrolleneinheit ist aus der US-A-3 698 539 bekannt. Diese bekannte Einheit weist einen am Boden eines Frachtraums zu befestigenden Grundrahmen und ein an einem Ende schwenkbar am Grundrahmen gelagertes Lagergestell auf, das in der Nähe der Schwenkachse einen Motor trägt und im Abstand zur Schwenkachse eine drehbar, jedoch bezüglich des Lagergestells ortsfest gelagerte Antriebsrolle, sowie eine mit dem freien Ende des Lagergestells verbundene Nockensteueranordnung, mittels der das Lagergestell bezüglich des Grundrahmens aus der Ruhestellung in die Arbeitsstellung verschwenkbar ist. Die Abtriebswelle des Motors ist über einen Getriebezug mit dem Eingang eines Planetengetriebes gekoppelt, dessen einer Ausgang über eine Getriebeanordnung mit der Antriebswelle der Antriebsrolle gekoppelt ist, während der andere Ausgang des Planetengetriebes die Nockensteuereinheit antreibt.

Im Ruhezustand liegt das Lagergestell auf dem Grundrahmen auf, so daß die Antriebsrolle abgesenkt im Abstand zum Boden eines darüber auf einer Rollförderbahn herangeführten Frachtbehälters steht. Um den Frachtbehälter auf der Rollenbahn in Bewegung zu setzen, wird zunächst der Motor eingeschaltet, der den Eingang des Planetengetriebes antreibt. Zu diesem Zeitpunkt wird die Antriebsrolle mittels einer Rutschkupplung mit einem vorbestimmten Bremsdrehmoment gegen Drehung festgehalten, so daß das Antriebsmoment des Motors zwangsläufig über den anderen Ausgang des Planetengetriebes auf die Nockensteuereinheit einwirkt, die dadurch mit ihren Nocken, die sich an dem Grundrahmen abstützen, das Lagergestell nach oben in die Arbeitsstellung schwenkt, bis die Antriebsrolle in Eingriff mit der Unterseite des Bodens des Frachtbehälters gelangt. Wegen des Gewichts des Frachtbehälters wird dadurch die Bewegung der Nockensteuereinheit blockiert und die Antriebsrolle wird gegen den Behälterboden gedrückt. Dadurch aber wird auch der die Nockensteuereinheit treibende Ausgang des Planetengetriebes blockiert, so daß der die Antriebsrolle antreibende andere Ausgang des Planetengetriebes an die Antriebsrolle ein Bremsmoment überträgt, das das Bremsdrehmoment der Rutschkupplung überwindet, so daß die an dem Behälterboden angedrückte Antriebsrolle sich zu drehen beginnt und der Behälter in einer von der Drehrichtung des Antriebsmotors abhängigen Richtung vorwärts bewegt wird.

Problematisch ist dabei in der Praxis, daß die gesamte Getriebeanordnung vom Motor zur Antriebsrolle einerseits und zur Nockensteuerung andererseits sehr aufwendig gestaltet ist und viele Teile aufweist. Überdies ist eine Nockensteuerung erforderlich, so daß der Gesamtaufbau eine große Anzahl von mechanisch bewegten Teilen enthält. Dadurch ergeben sich nicht nur bei der Herstellung hohe Kosten, sondern auch ein im Flugzeugbau höchst unerwünschtes hohes Gewicht und eine große Bauform. Zudem führt die große Anzahl von zueinander bewegten Teilen zu einer unerwünschten Verschleißanfälligkeit und es sind kurze Wartungsintervalle erforderlich, um die im Flugzeugbetrieb geforderte hohe Zuverlässigkeit zu gewährleisten.

Überdies wird bei dieser Antriebsrolleneinheit als Rutschkupplung eine sogenannte Fluid-Reibungskupplung verwendet, deren Betriebsverhalten sehr temperaturabhängig ist. Aufgrund der im Betrieb im Frachtraum eines Flugzeugs auftretenden hohen Temperaturunterschiede ist es daher erforderlich, das maximale Drehmoment der Rutschkupplung so hoch zu wählen, daß auch bei den ungünstigsten Temperaturen der erforderliche Minimalwert nicht unterschritten wird. Dadurch aber ergeben sich hohe Kraftspitzen beim Einsetzen der Drehung der an den Behälterboden angedrückten Antriebsrolle, welche auf die Bodenstruktur des Flugzeug-Frachtraumes einwirken. Dies ist in der Praxis außerordentlich unerwünscht, da bestimmte Grenzbelastungen der Bodenstruktur nicht überschritten werden dürfen und überdies Stoßbelastungen äußerst unerwünscht sind.

Vor allem aber weist die bekannte Antriebsrolleneinheit eine recht große Bauform auf und die einzelnen Bauteile liegen mehr oder weniger ungeschützt nebeneinander, so daß im Betrieb nicht nur mit Verschmutzungen und dadurch hervorgerufenen Betriebsstörungen zu rechnen ist, sondern auch mit Beschädigungen durch eingedrungene Gegenstände oder durch direkte Krafteinwirkung.

Eine von Aufbau und Betriebsweise ähnliche Antriebsrolleneinheit ist ferner aus EP-B1-0 149 658 bekannt, bei der neben großer Bauform ebenfalls im Betrieb Probleme durch eindringende Fremdkörper oder durch Gewalteinwirkung auftreten können.

Die der Erfindung zugrundeliegende Aufgabe besteht somit darin, eine Antriebsrolleneinheit der eingangs genannten Gattung zu schaffen, deren Zuverlässigkeit verbessert und deren konstruktiver Aufbau vereinfacht sind.

Gemäß der Erfindung wird diese Aufgabe bei einer Antriebsrolleneinheit der eingangs genannten Gattung dadurch gelöst, daß der Innenzahnkranz der Antriebsrolle als das Kronenrad eines Planetengetriebes ausgebildet ist, daß ein Planetenrad des Planetengetriebes einerseits mit dem Innenzahnkranz und andererseits mit einem von der Elektromotoranordnung angetriebenen Sonnenrad des Planetengetriebes kämmt, und daß der Planetenträger dieses Planetenrads fest mit dem Führungskörper verbunden ist.

Bei dieser erfindungsgemäßen Ausgestaltung sind alle bewegten Teile, nämlich der Antriebsmotor, der Führungskörper und das Planetengetriebe im Inneren der hohlzylindrischen Antriebsrolle untergebracht, so daß all diese Elemente gegen Verschmutzung und Beschädigung geschützt sind.

Vor allem aber wird durch die Erfindung gegenüber dem Stand der Technik eine Vereinfachung des Aufbaus durch Wegfall der beim eingangs genannten Stand der Technik notwendigen Getriebeanordnung, insbesondere des Antriebszahnrades erreicht.

Bei einer erfindungsgemäß bevorzugten Ausführungsform ist vorgesehen, daß der Stator der innerhalb des als Hohlkörper ausgebildeten Führungskörpers angeordneten Elektromotoranordnung fest mit dem Führungskörper verbunden ist. Der Rotor und der Stator der Elektromotoranordnung sind dabei konzentrisch zueinander und konzentrisch zu den kreiszylindrischen Außenumfangsflächenbereichen des Führungskörpers angeordnet. Dadurch ergibt sich eine besonders gute Raumausnutzung im Inneren der hohlzylindrischen Antriebsrolle und des als Hohlkörper ausgebildeten Führungskörpers, so daß bei vorgegebenen Außenabmessungen der Antriebsrolleneinheit ein besonders großer und damit auch sehr leistungsstarker Motor untergebracht werden kann.

Normalerweise liegt bei der vorgenannten Ausführungsform der anzutreibende Gegenstand, beispielsweise der Frachtcontainer, auf der in Ruhestellung befindlichen Antriebsrolle auf und hält diese fest. Die Antriebsrolle wird dadurch beim Einschalten gegen Drehung abgebremst und drückt daher aus ihrer unteren Ruhestellung in ihre obere Arbeitsstellung gegen den Boden des Frachtbehälters. Sofern es erwünscht ist, daß sich die Antriebsrolle auch ohne aufliegenden Gegenstand beim Einschalten in die Arbeitsstellung nach oben bewegt, kann vorgesehen sein, daß die Drehung der Antriebsrolle mittels einer Bremse bezüglich der Basis mit einem definierten Bremsmoment abgebremst ist.

Diese Bremse ist vorteilhafterweise als Rollenreibungsbremse ausgebildet, die zwischen einem mit dem Innenzahnkranz der Antriebsrolle kämmenden Zahnrad und einem drehfest mit der Basis verbundenen, zur Drehachse des Führungskörpers konzentrischen Lagerzapfen angreift. Durch diese Ausgestaltung wird ein nahezu verschleißfreier Betrieb der Bremse bei einfachem Aufbau mit wenigen Teilen erreicht.

Bei einer alternativ bevorzugten Ausführungsform der Erfindung ist vorgesehen, daß der Stator der innerhalb des als Hohlkörper ausgebildeten Führungskörpers angeordneten Elektromotoranordnung fest mit der Basis verbunden ist, und daß der Führungskörper auf dem Stator drehbar gelagert ist. Der Rotor und der Stator der Elektromotoranordnung sind dabei konzentrisch zueinander und zur Drehachse des Führungskörpers, jedoch entsprechend exzentrisch zu den kreiszylindrischen Außenumfangsflächen des Führungskörpers angeordnet. Durch diese Ausführungsform wird erreicht, daß eine Bremse wie bei der erstgenannten Ausführung auch dann nicht notwendig ist, wenn sich die Antriebsrolle auch ohne Abbremsung durch einen aufliegenden Gegenstand beim Einschalten aus ihrer Ruhestellung in die Arbeitsstellung heben soll. Zusätzlich fällt auch die bei der erstgenannten Ausführungsform erforderliche Schleifringanordnung zur Stromzufuhr an den Stator fort, da ja der Stator bei dieser Ausgestaltung fest mit der Basis verbunden ist und daher eine feststehende Leitungsführung möglich ist.

Bevorzugt kann überdies vorgesehen sein, daß der Planetenträger des Planetenrads einstückig mit dem Führungskörper ausgebildet ist, wodurch sich bei allen vorgenannten Ausführungsformen eine Vereinfachung des Aufbaus ergibt.

Die Erfindung wird im folgenden beispielsweise unter Bezugnahme auf die Zeichnung näher erläutert; es zeigt:
- Fig. 1: einen stark schematisiert dargestellten vertikalen Längsquerschnitt einer ersten Ausführungsform einer Antriebsrolleneinheit;
- Fig. 2: einen stark schematisiert dargestellten vertikalen Längsquerschnitt einer zweiten Ausführungsform einer Antriebsrolleneinheit;
- Fig. 3: einen vereinfachten Längsquerschnitt einer praktischen Ausführungsform des ersten Ausführungsbeispiels einer Antriebsrolleneinheit gemäß Fig. 1; und
- Fig. 4: einen vereinfachten Längsquerschnitt einer praktischen Ausführungsform des zweiten Ausführungsbeispiels einer Antriebsrolleneinheit gemäß Fig. 2.

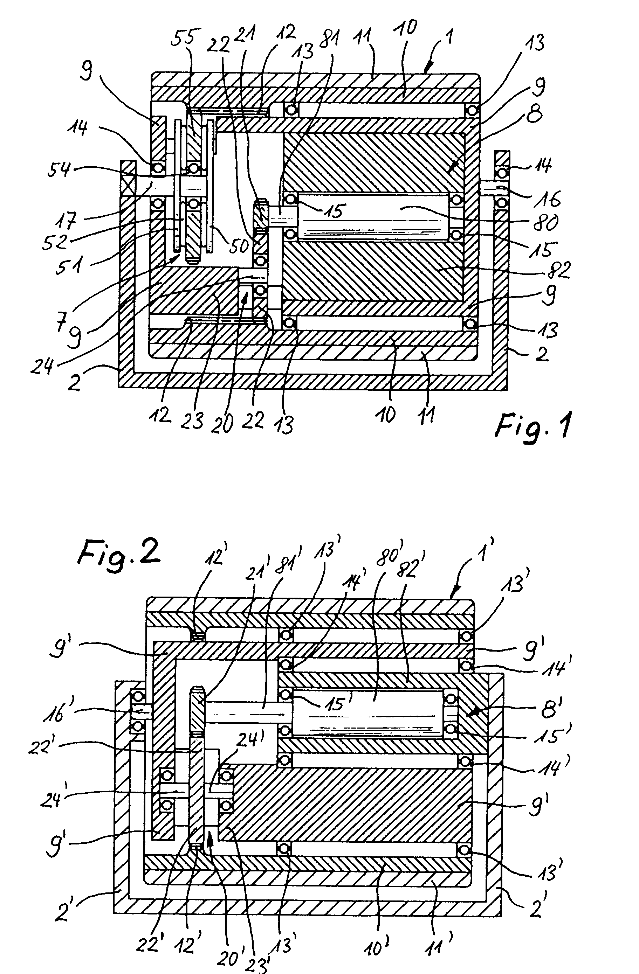

Mit Bezug auf die Fig. 1 werden zunächst der grundsätzliche Aufbau und die Funktionsweise der ersten Ausführungsform einer erfindungsgemäßen Antriebsrolleneinheit erläutert. Die Fig. 1 ist zum Zweck der Erläuterung und zum besseren Verständnis des Grundprinzips sehr stark vereinfacht und schematisiert ausgestaltet.

Wie in der Fig. 1 gezeigt ist, besteht die Antriebsrolleneinheit grundsätzlich aus einer in etwa als hohler Kreiszylinder ausgebildeten Antriebsrolle 1, in deren Innenraum ein Führungskörper 9, eine Motoranordnung 8, ein Planetengetriebe 20 und eine Bremse 7 aufgenommen sind. Die Motoranordnung 8 ist über das Planetengetriebe 20 antriebsmäßig mit dem Führungskörper 9 bzw. der Antriebsrolle 1 gekoppelt. Die gesamte Antriebsrolleneinheit ist in einer Basis 2 aufgenommen, welche in einer Rollenförderbahn fixiert ist. Der Führungskörper 9 besitzt eine im wesentlichen kreiszylindrische Außenoberfläche, auf der die Antriebsrolle 1 mittels der Wälzlager 13 drehbar gelagert ist. Dieser Führungskörper ist auf dem in der Fig. 1 rechten axialen Ende auf einem Lagerzapfen 16 und auf seinem in der Fig. 1 linken axialen Ende auf einem Lagerzapfen 17 mittels der Wälzlager 14 über eine zu seiner zylindrischen Außenoberfläche exzentrischen Drehachse bezüglich der Basis 2 drehbar gelagert. Der Führungskörper ist als Hohlkörper ausgebildet, wobei im rechten Teil seines Innenraums die Elektromotoranordnung 8 aufgenommen ist. Diese Elektromotoranordnung 8 umfaßt einen fest mit dem Führungskörper verbundenen Stator 82, der die Feldwicklung der Elektromotoranordnung 8 enthält, welche über eine (nicht dargestellte) Kontaktanordnung mit der Stromversorgung der Basis 2 verbunden ist. Der Stator 82 ist konzentrisch zur kreiszylindrischen Außenoberfläche des Führungskörpers 9 angeordnet und innerhalb des Stators 82 ist wiederum konzentrisch zu dieser Außenoberfläche ein mittels der Wälzlager 15 im Stator drehbar gelagerter Rotor 80 vorgesehen, dessen in der Fig. 1 linkes Ende der Rotorwelle 81 das Sonnenrad 21 des Planetengetriebes drehfest trägt.

Das Planetengetriebe 20 weist wenigstens ein Planetenrad 22 auf, das auf einem Lagerzapfen 24 des Planetenträgers 23 drehbar gelagert ist und einerseits mit dem Sonnenrad 21 und andererseits mit einer als Kronenrad des Planetengetriebes 20 ausgebildeten Innenverzahnung 12 der Antriebsrolle 1 kämmt. Der Planetenträger 23 ist fest mit dem Führungskörper 9 verbunden, bzw., wie in der Fig. 1 dargestellt, einstückig mit diesem ausgebildet.

In dem in der Fig. 1 linken Teil des Innenraums des Führungskörpers ist die bereits erwähnte Bremse 7 angeordnet. Diese Bremse 7 umfaßt zwei drehfest mit dem ebenfalls drehfest mit der Basis verbundenen Lagerzapfen 17 verbundene Bremsscheiben 50. Zwischen diesen Bremsscheiben 50 ist ein auf dem Lagerzapfen 17 drehbar gelagertes Zahnrad 55 angeordnet, wobei jeweils zwischen der dem Zahnrad 55 zugewandten Seite jeder Bremsscheibe 50, 51 und dem Zahnrad 55 eine Vielzahl von umfangsmäßig verteilten und schräg zum Radius angeordneten Bremsrollen 52 angeordnet ist. Mittels einer nicht gezeigten Federanordnung sind die Bremsscheiben 50 mit den Bremsrollen 52 gegen das Zahnrad 55 angepreßt. Das Zahnrad 55 kämmt mit dem Innenzahnkranz 12 der Antriebsrolle 1, so daß bei einer Drehung der Antriebsrolle das Bremsmoment der Bremse zwischen der Basis 2 und der Antriebsrolle wirkt.

Die Antriebsrolle 1 besteht aus einem inneren, im wesentlichen als Hohlzylinder ausgebildeten Rollenkörper 10 und einem die Außenoberfläche des Rollenkörpers 10 bedeckenden Rollenmantel 11 aus elastischem Material. In der Nähe des in der Fig. 1 linken axialen Stirnendes ist an der inneren Oberfläche des etwa hohlzylindrischen Rollenkörpers 10 ein Innenzahnkranz 12 angeformt oder angebracht, der konzentrisch mit dem Rollenkörper 10 ausgebildet ist und der mit dem Planetenrad 22 des Planetengetriebes 20 im kämmenden Eingriff steht. Die Antriebsrolle 1 ist mittels der Lager 13, die als Nadel- oder Kugellager ausgebildet sind, konzentrisch auf und zu der kreiszylindrischen Außenoberfläche des Führungskörpers 9 drehbar gelagert, wobei diese Außenoberfläche des Führungskörpers bezüglich der Drehachse des Führungskörpers an der Basis 2 exzentrisch angeordnet ist. Dadurch wird einerseits der kämmende Eingriff des Planetenrads 22 mit dem Innenzahnkranz 12 ständig sichergestellt und andererseits zugleich die exzentrische Anordnung der Antriebsrolle 1 und des Innenzahnkranzes 12 bezüglich der Drehachse des Führungskörpers 9.

Die Fig. 1 zeigt die Ruhestellung der Antriebsrolle im abgesenkten Zustand, in dem sie außer Eingriff mit einem auf der zugehörigen Rollenförderbahn ruhenden, zu fördernden Gegenstand (nicht gezeigt) sein kann.

Wenn nun ausgehend von diesem Ruhezustand die Stromzufuhr zur Elektromotoranordnung 8 eingeschaltet wird, wirkt zwischen dem Rotor 80 und dem Stator 82 wie bei jedem anderen Elektromotor ein Drehmoment. Wegen der größeren Eigenträgheit des Stators 82 beginnt zunächst der Rotor 80 sich zu drehen, wobei er das Sonnenrad 21 des Planetengetriebes 20 drehend antreibt. Dieses Sonnenrad treibt das Planetenrad 22 an, das im kämmenden Eingriff mit dem als Kronenrad ausgebildeten Innenzahnkranz 12 der Antriebsrolle steht. Da die Antriebsrolle 1 durch die Bremse 7 bezüglich der Basis gegenüber einer Drehung abgebremst ist, verharrt sie zunächst im Stillstand. Dadurch muß sich das Planetenrad zwangsläufig auf dem stillstehenden Innenzahnkranz 12 abwälzen. Da es auf dem Lagerzapfen 24 des fest mit dem Führungskörper 9 verbundenen Planetenträgers 23 gelagert ist, muß es bei dieser Abwälzbewegung zwangsläufig den Führungskörper mitnehmen, so daß der exzentrisch auf den Lagerzapfen 16 und 17 bezüglich der Basis 2 gelagerte Führungskörper eine Schwenkbewegung nach oben ausführt und dabei die auf ihm gelagerte Antriebsrolle mitnimmt. Die Antriebsrolle 1 wird dadurch aus ihrer Ruhestellung in die obere Antriebsstellung gebracht und dabei an die Unterseite des anzutreibenden Gegenstands angepreßt. Wegen des Gewichts dieses Gegenstands wird die Weiterbewegung der Antriebsrolle und damit auch des Führungskörpers nach oben blockiert. Durch diese Blockierung kann sich nun das Planetenrad 22 nicht länger auf dem Innenzahnkranz 12 der Antriebsrolle 1 abwälzen. Es muß beginnen, sich stationär zu drehen, so daß zwangsweise auf die Antriebsrolle ein so großes Antriebsdrehmoment ausgeübt wird, daß das Bremsmoment der Bremse 7 überwunden wird und die Antriebsrolle sich in Drehung versetzt. Diese Drehung der Antriebsrolle, die gegen die Unterseite des zu fördernden Gegenstands angepreßt ist, übt eine Tangentialkraft auf den Gegenstand aus, so daß sich dieser, wie gewünscht, in Bewegung setzt.

Bei der vorstehenden Funktionsweise ist es von höchster Wichtigkeit, daß der Drehsinn des Planetenrades und der Antriebsrolle in Bezug zur Transportrichtung derart gewählt sind, daß der anzutreibende Gegenstand in der Antriebsstellung, in der die Antriebsrolle gegen die Unterseite des Gegenstands angepreßt ist, ein auf seiner Eigenträgheit bzw. Reibungskräften beruhendes Bremsmoment auf die Antriebsrolle in der gleichen Richtung ausübt, wie dies auch die Bremse 7 ausgehend von der Ruhestellung bewirkt. Nur auf diese Weise ist sichergestellt, daß die hemmende Bremswirkung des zu fördernden Gegenstands bewirkt, daß die Antriebsrolle gegen den Boden dieses Gegenstands in der gleichen Weise angepreßt wird, wie dies anfänglich durch die Bremse 7 bewirkt wurde. Die Wahl eines falschen Drehsinnes des Planetenrads 22 und des Innenzahnkranzes 12 der Antriebsrolle 1 würde diese selbsthaltende Funktion der Antriebsrolle in der oberen Ruhestellung verhindern.

Hier ist anzumerken, daß die Bremse 7 bei bestimmten Anwendungsfällen auch weggelassen werden kann. Es sei angenommen, daß die Ruhestellung der Antriebsrolle derart gewählt ist, daß ein zu fördernder Gegenstand in dieser Ruhestellung, im ausgeschalteten Zustand der Elektromotoranordnung 8 bereits auf der Oberfläche der Antriebsrolle aufliegt. Wenn bei dieser Gestaltung die Elektromotoranordnung 8 eingeschaltet wird, dann übt der auf der Antriebsrolle ruhende Gegenstand ein ausreichendes Bremsmoment aus, daß zunächst die beschriebene Abwälzbewegung des Planetenrades 22 am Innenzahnkranz 12 stattfindet und das Planetenrad notgedrungen den Führungskörper 9 um seine Drehachse zusammen mit der Antriebsrolle 1 nach oben zu schwenken versucht. Diese Schwenkbewegung wird durch die Elastizität des Rollenmantels 11 ermöglicht und begrenzt, sie führt jedoch dazu, daß die Antriebsrolle 1 gegen die Unterseite des zu fördernden Gegenstandes angepreßt wird, so daß die weitere Schwenkbewegung unterbunden wird und das Planetenrad 22 die Antriebsrolle 1 in der beschriebenen Weise in Drehung versetzt.

Wenn nun ausgehend von diesem Antriebs-Betriebszustand die Stromzuführung zur Elektromotoranordnung 8 abgeschaltet wird, kommt der Rotor 80 der Elektromotoranordnung bezüglich des Stators 8 zum Stillstand, so daß das auf die Antriebsrolle 1 von dem Planetenrad 22 ausgeübte Drehmoment wegfällt und auch das den Führungskörper 9 nach oben drehende Antriebsdrehmoment. Wegen der exzentrischen Drehachse des Führungskörpers und der dadurch gegebenen asymmetrischen Massenverteilung schwenkt daher der Führungskörper 9 in seine in der Fig. 1 gezeigte Ruhestellung zurück und nimmt bei dieser Schwenkbewegung die Antriebsrolle 1 mit, so daß diese wieder außer Eingriff mit dem Boden des zu fördernden Gegenstands gelangt oder zumindest bei einer Ausführung ohne besonders Bremse 7 nicht mehr gegen den Boden des Gegenstands angedrückt wird.

Die wahlweise vorgesehene Bremse 7 ist, wie schematisch angedeutet, als mechanische Rollenreibungsbremse ausgebildet, wie vorstehend bereits erläutert.

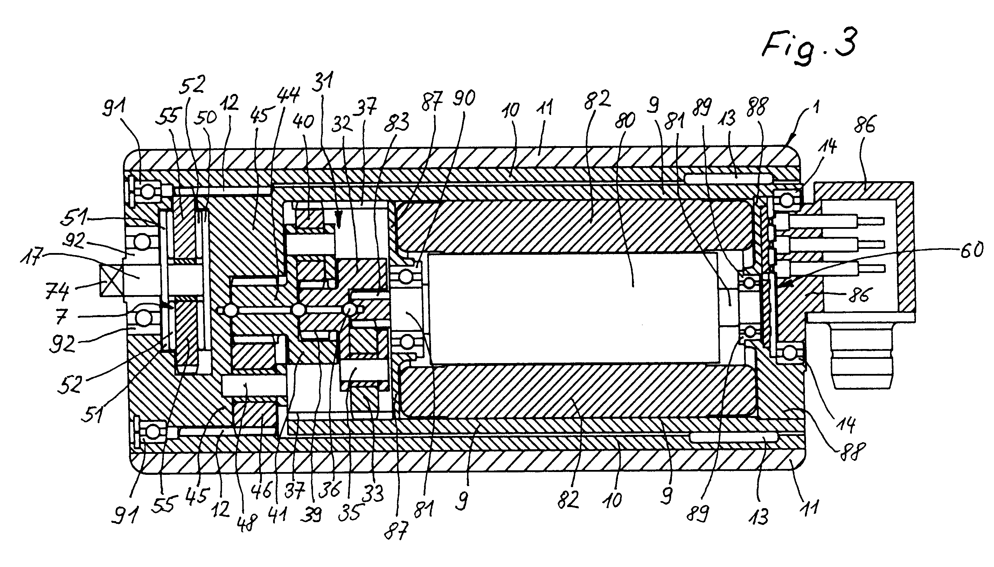

Nachstehend wird nun mit Bezug auf die Fig. 3 eine in vielen Einzelheiten vereinfacht dargestellte praktische Ausführungsform des ersten Ausführungsbeispiels der erfindungsgemäßen Antriebsrolleneinheit beschrieben.

Wie in der Fig. 3 gezeigt ist, umfaßt diese Ausführungsform der Antriebsrolleneinheit eine äußere, etwa hohlzylindrische Antriebsrolle 1, die mittels der Wälzlager 13 und 91 auf zylindrischen Außenflächenbereichen des Führungskörpers 9 drehbar gelagert ist. Im Innenraum des als Hohlkörper ausgebildeten Führungskörpers 9 sind eine in der Fig. 3 im rechten Teil angeordnete Elektromotoranordnung 8, ein sich nach links davon anschließendes Planetengetriebe 31 und die sich wiederum links davon anschließende Bremse 7 vorgesehen.

Die Elektromotoranordnung umfaßt einen die (nicht dargestellte) Feldwicklung enthaltenden Stator 82 und einen konzentrisch innerhalb des Stators 82 in Wälzlagern 89 bzw. 90 drehbar gelagerten Rotor 80. Der Stator 82 ist konzentrisch zu den kreiszylindrischen Außenumfangsbereichen des Führungskörpers 9 angeordnet und fest mit dem Führungskörper 9 verbunden. Seine Stromzuführung erfolgt über eine nur schematisch angedeutete Kontaktanordnung 60 aus Schleifringen, wobei diese Kontaktanordnung über ein fest mit der Basis verbundenes Anschlußgehäuse 86 mit der Stromversorgung der Basis verbunden ist.

Zur Lagerung des Rotors 80 ist im Inneren des Führungskörpers 9 und fest mit diesem verbunden auf der in der Fig. 3 rechten Seite ein etwa radialer Lagerflansch 88 angeordnet, in welchem das rechte Ende der Rotorwelle 81 über Wälzlager 89 gelagert ist. Das linke Ende der Rotorwelle 81 ist über Wälzlager 90 in einem weiteren Lagerflansch 87 gelagert, der ebenfalls fest mit dem Führungskörper verbunden oder mit diesem einstückig ausgebildet ist.

Das Anschlußgehäuse 86 ist als Hohlkörper ausgebildet, der einerseits zur Befestigung an der Basis 2 dient und andererseits zur Stromzuführung zur Feldwicklung des Stators 82 der Elektromotoranordnung 8. Im Inneren dieses Hohlkörpers können verschiedene Komponenten aufgenommen sein, wie beispielsweise ein Thermoschutzschalter, der Anschlußstecker zur Stromverbindung mit der Basis und die bereits erwähnte Kontaktanordnung 60 zur Stromzufuhr zu dem bezüglich der Basis drehbaren bzw. schwenkbaren Stator 82.

Der die Elektromotoranordnung 8 umhüllende Führungskörper 9 ist auf dem in der Fig. 3 rechten axialen Ende mittels der Wälzlager 14 über das Anschlußgehäuse 86 an der Basis gelagert; das in der Fig. 3 linke axiale Ende des Führungskörpers 9 ist über die Wälzlager 92 auf einem Lagerzapfen 17 drehbar gelagert, der mittels eines Vierkants 74 drehfest mit der Basis verbindbar ist. Die durch die Wälzlager 92 und 14 vorgegebene Drehachse des Führungskörpers ist exzentrisch bezüglich der kreiszylindrischen Außenumfangsoberfläche des Führungskörpers, auf dem die Antriebsrolle 1 mittels der Wälzlager 13 und 91 drehbar gelagert ist.

Die Antriebsrolle 1 ist im wesentlichen als hohler Kreiszylinder ausgebildet, der den Führungskörper 9 umgibt. Die Antriebsrolle 1 besteht aus einem Rollenkörper 10 und einem die Außenfläche des Rollenkörpers 10 bedeckenden Rollenmantel 11, der fest mit dem Rollenkörper 10 verbunden ist. Der Rollenmantel besteht aus einem abriebfesten elastischen Kunststoff, während der Rollenkörper 10 aus Metall geformt ist. In der Nähe der beiden axialen Stirnenden des Rollenkörpers 10 ist jeweils an der Innenseite des Rollenkörpers 10 ein Wälzlager 13 bzw. 91 angeordnet, das den Rollenkörper 10 drehbar auf den kreiszylindrischen Umfangsflächen des Führungskörpers 9 lagert. Der an die in der Fig. 3 linke Stirnseite angrenzende Bereich der Innenseite des Rollenkörpers 10 ist mit einem Innenzahnkranz 12 versehen, der konzentrisch zur Längsachse des hohlzylindrischen Rollenkörpers 10 geformt ist.

Im Innenraum des als Hohlkörper ausgebildeten Führungskörpers 9 ist in der Fig. 3 links von dem die Rotorwelle 81 lagernden Lagerflansch 87 ein Planetengetriebe 31 mit drei in Axialrichtung aufeinanderfolgenden Getriebestufen vorgesehen. Die ausgehend von der Rotorwelle 81 ersten beiden Getriebestufen dienen lediglich der Drehzahluntersetzung, während die dritte Getriebestufe die für die Arbeitsweise der Rollenantriebseinheit wichtige Funktion der Schwenkung der Antriebsrolle und des Drehantriebs der Antriebsrolle ausführt, wie bereits vorstehend mit Bezug auf die Fig. 1 beschrieben. Das bedeutet, daß das in der Fig. 1 schematisch dargestellte Planetengetriebe 20 der dritten Stufe (in der Fig. 3 ganz links gelegen) des Planetengetriebes 31 entspricht.

Die ersten beiden Stufen des Planetengetriebes 31 sind von ihrer Funktion her in herkömmlicher Weise aufgebaut, so daß für den Fachmann die kurze nachfolgende Beschreibung genügen wird. Das Planetengetriebe 31 umfaßt in der ersten Stufe einen Planetenträger 32, an dem mittels Lagerzapfen 35 drei Planetenräder 33 gelagert sind, die auf einem Sonnenrad umlaufen, welches durch eine Außenverzahnung 83 auf dem linken Ende der Rotorwelle 81 gebildet ist.

Axial nach links in der Fig. 3 ist an dem ersten Planetenträger 32 und einstückig mit diesem das Sonnenrad 39 der zweiten Getriebestufe angeformt, auf dem wiederum die auf Lagerzapfen am Planetenträger 41 gelagerten Planetenräder 40 umlaufen. Am zweiten Planetenträger 41 ist ebenfalls nach links in der Fig. 3 das Sonnenrad 44 der dritten Getriebestufe einstückig angeformt, auf dem die Planetenräder 46 dieser dritten Getriebestufe umlaufen, die mit Lagerzapfen 48 am Planetenträger 45 drehbar gelagert sind. Jeweils zwischen der linken Stirnfläche eines Sonnenrads und der nach links folgenden zugewandten Fläche des jeweiligen Planetenträgers ist eine Lagerkugel 36 angeordnet, die eine freie und reibungsarme Drehbarkeit dieser benachbarten Teile zueinander gewährleistet.

Die Planetenräder 33 und 40 der ersten und zweiten Getriebestufe stehen jeweils in kämmendem Eingriff mit einem sie umgebenden Kronenrad 37, das als Innenverzahnung des Führungskörpers 9 ausgebildet ist. Der Planetenträger 45 der dritten Getriebestufe ist fest mit dem Führungskörper 9 verbunden bzw. einstückig mit diesem ausgebildet, wie in der Zeichnung dargestellt.

Wie bereits erwähnt, ist die dritte Getriebestufe des Planetengetriebes 31 abweichend von der ersten und zweiten Getriebestufe ausgebildet. Die Planetenräder 46 (von denen in der Zeichnung nur eines dargestellt ist) der dritten Getriebestufe stehen nämlich einerseits mit dem Sonnenrad 44 und andererseits mit dem als Kronenrad ausgebildeten Innenzahnkranz 12 der Antriebsrolle in kämmendem Eingriff, wie mit Bezug auf die Fig. 1 für das Planetengetriebe 20 ausführlich erläutert.

In dem in der Fig. 3 linken Teil des inneren Hohlraums des Führungskörpers bzw. des als Teil des Führungskörpers ausgebildeten Planetenträgers 45 ist die Bremse 7 angeordnet.

Die Bremse 7 umfaßt zwei Bremsscheiben 50, 51, die beide drehfest mit dem Lagerzapfen 17 verbunden sind, der seinerseits über den Vierkant 74 drehfest mit der Basis verbindbar ist. Zwischen den beiden Bremsscheiben 50, 51 ist ein Zahnrad 55 angeordnet, das frei drehbar auf dem Lagerzapfen 17 gelagert ist und das mit seiner Außenverzahnung mit dem Innenzahnkranz 12 der Antriebsrolle 1 kämmt. Zwischen den beiden axialen Stirnflächen dieses Zahnrads 55 und den ihnen zugewandten axialen Stirnflächen der Bremsscheiben 50 und 51 sind jeweils eine Vielzahl von über den Umfang verteilten, bezüglich eines Radius jeweils schräg angeordneten Bremsrollen 52 angeordnet.

Zweckmäßigerweise ist eine der beiden Bremsscheiben 50 oder 52 zwar drehfest mit dem Lagerzapfen 24 verbunden, jedoch geringfügig axial verschiebbar angebracht. Auch das auf dem Lagerzapfen 24 gelagerte Zahnrad ist geringfügig axial verschiebbar. Durch eine (in der Zeichnung nicht dargestellte) Federanordnung werden bei dieser Ausführung die Bremsscheiben und die Bremsrollen 52 in definierter Weise gegen die Stirnflächen des Zahnrades 55 angedrückt, so daß sich ein vorgegebenes Bremsmoment einstellt.

Eine derartige Rollreibungsbremse ist an sich nach Funktion und Aufbau bekannt und bedarf daher für den Fachmann keiner weiteren Erläuterungen.

Die Funktionsweise dieses soeben beschriebenen Ausführungsbeispiels wurde bereits ausführlich mit Bezug auf die schematische Darstellung der Fig. 1 erläutert. Wesentlich für die Funktion ist dabei, daß der Führungskörper 9 um eine Drehachse drehbar gelagert ist, die bezüglich seiner Außenumfangsflächen, auf denen die Antriebsrolle drehbar gelagert ist, exzentrisch angeordnet ist. Ferner ist von Bedeutung, daß der Stator 82 der Elektromotoranordnung 8 fest mit dem Führungskörper 9 verbunden ist und daß der Innenzahnkranz 12 der Antriebsrolle 1 das Kronenrad der dritten Getriebestufe des Planetengetriebes 31 darstellt.

Die Bremse 7 kann wahlweise vorgesehen sein, wie mit Bezug auf die Fig. 1 bereits erläutert.

Die in der Fig. 2 sehr vereinfacht und schematisch dargestellte zweite Ausführungsform einer erfindungsgemäßen Rollenantriebseinheit unterscheidet sich von der ersten Ausführungsform gemäß den Fig. 1 und 3 im wesentlichen dadurch, daß der Stator 82′ der Elektromotoranordnung 8′ drehfest und starr mit der Basis 2′ verbunden ist, während der Führungskörper 9′ drehbar auf der Außenumfangsfläche des Stators 82′ gelagert ist. Diese Außenumfangsfläche des Stators 82 ist derart ausgebildet und angeordnet, daß die drehbare Lagerung des Führungskörpers 9′ um eine zu seinen kreiszylindrischen Außenumfangsflächenbereichen exzentrische Achse erfolgt.

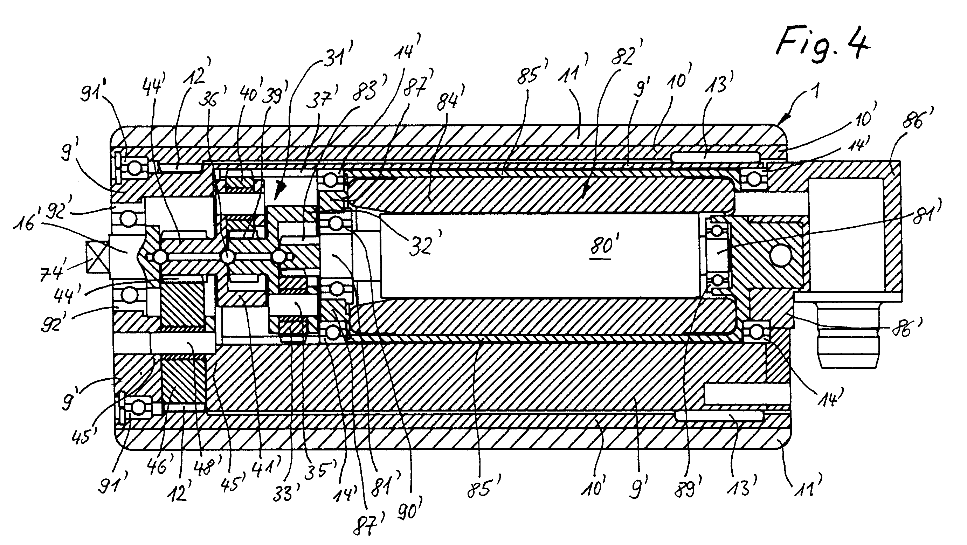

In der Fig. 2 sind ebenso wie in der zu dem gleichen zweiten Ausführungsbeispiel gehörigen Fig. 4 für Teile, die den entsprechenden Teilen der ersten Ausführungsform der Fig. 1 und 3 entsprechen, die gleichen Bezugszeichen, jedoch jeweils mit Apostroph, verwendet.

Wie in der Fig. 2 dargestellt, ist bei dieser Ausführungsform der Stator 82′ drehfest und starr mit der Basis 2′ verbunden. Dieser Stator 82′ umfaßt die Feldwicklung der Motoranordnung, so daß die Stromzuführung unmittelbar über feste Leitungen von der Basis 2′ her erfolgen kann. Innerhalb des Stators 82′ ist konzentrisch zu dessen Außenoberfläche der Rotor 80′ mittels der Lager 15′ drehbar gelagert. Mit dem in der Fig. 2 links liegenden Ende der Rotorwelle 81′ des Rotors 80′ ist das Sonnenrad 21′ des Planetengetriebes 20′ verbunden.

Der Führungskörper 9′ besitzt eine zu seiner kreiszylindrischen Außenoberfläche, auf der die Antriebsrolle 1′ drehbar gelagert ist, exzentrische Bohrung, in welcher die Elektromotoranordnung 8′ aufgenommen ist. Der Führungskörper 9′ ist wie bei dem ersten Ausführungsbeispiel gemäß Fig. 1 bezüglich der Basis 2′ um eine zu seiner kreiszylindrischen Außenoberfläche exzentrische Drehachse drehbar gelagert. Diese Lagerung erfolgt an dem in der Fig. 2 linken Ende mittels eines Lagerzapfens 16′ und an dem in der Fig. 2 rechts gelegenen Bereich auf der zum Lagerzapfen 16′ konzentrischen Außenoberfläche des Stators 82′ mittels der Wälzlager 14′.

Hervorzuheben ist, daß die Ausführungsform der Fig. 2 gegenüber dem ersten Ausführungsbeispiel gemäß Fig. 1 keine besondere Bremse 7 benötigt. Zum Hochlaufen der Antriebsrolle 1′ aus der unteren Ruhestellung in die obere Antriebsstellung genügen die Eigenträgheit der Antriebsrolle 1′ und die durch die Reibung der Lager 13′, mit denen die Antriebsrolle 1′ auf dem Führungskörper 9′ gelagert ist, vorgegebenen Bremsmomente. Dies gilt sowohl in dem Fall, bei dem die Antriebsrolleneinheit beim Einschalten völlig unbelastet ist, als auch in dem anderen Fall, bei dem die Antriebsrolle 1′ beim Einschalten bereits durch einen aufliegenden, zu fördernden Gegenstand abgebremst wird.

Im übrigen ist die Funktionsweise der Antriebsrolleneinheit der Fig. 2 weitgehend identisch mit der der Antriebsrolleneinheit der Fig. 1.

Wenn ausgehend von dem in der Zeichnung dargestellten Ruhezustand die Stromzufuhr zur Elektromotoranordnung 8′ eingeschaltet wird, wirkt zwischen dem Rotor 80′ und dem Stator 82′ ein Drehmoment. Da der Stator 82′ starr und drehfest mit der Basis 2′ verbunden ist, beginnt sich der in dem Stator 82′ drehbar gelagerte Rotor 80′ zu drehen und treibt über das Sonnenrad 21′ das Planetengetriebe 20′ an. Wie vorstehend mit Bezug auf die Ausführung der Fig. 1 erläutert wurde, wird dadurch zuerst die Antriebsrolle 1′ durch den Führungskörper 9′ aus ihrer Ruhestellung in die obere Antriebsstellung geschwenkt. Erst nach Anlage der Antriebsrolle 1′ an der Unterseite des zu fördernden Gegenstands, beginnt die Antriebsrolle 1′ sich zu drehen, wobei das Planetenrad 22′ ortsfest gehalten wird.

Eine in vielen Einzelheiten vereinfachte praktische Ausführungsform des zweiten Ausführungsbeispiels der erfindungsgemäßen Antriebsrolleneinheit ist in der Fig. 4 dargestellt. Auch hier sind Teile, die mit entsprechenden Teilen des ersten Ausführungsbeispiels der Fig. 3 identisch sind oder diesen funktionsmäßig entsprechen, mit Bezugszeichen versehen, die aus den gleichen Bezugszahlen mit einem Apostroph gebildet sind.

Es sollen daher nur einige wenige Einzelheiten zur Erläuterung der Unterschiede des Aufbaus dargestellt werden:
Der Stator 82′ der Elektromotoranordnung 8 besteht aus einem inneren Statorkörper 84′, der fest mit einem ihn umhüllenden Statorgehäuse 85′ verbunden ist. Das Statorgehäuse 85′ ist über ein Anschlußgehäuse 86′ starr und drehfest mit der Basis verbunden. Die im Stator 82′ enthaltene Feldwicklung der Elektromotoranordnung ist über feste Anschlußleitungen mit der Stromversorgung der Basis verbunden. Konzentrisch innerhalb des Stators 82′ ist mittels der Wälzlager 89′ und 90′ der Rotor 80′ drehbar gelagert. Der Führungskörper 9′ ist auf dem in der Fig. 4 rechts gelegenen axialen Ende mittels der Wälzlager 14′ auf der Außenumfangsfläche des Statorgehäuses 85′ gelagert. Das Statorgehäuse 85′ ist an dem in der Fig. 4 links gelegenen axialen Ende mit einem radialen Lagerflansch 87′ abgeschlossen, auf dessen Außenseite der Führungskörper 9′ mittels der Wälzlager 14′ gelagert ist, während in der radial innen gelegenen Bohrung des Führungskörpers 87′ das linke Ende der Rotorwelle 81′ gelagert ist.

Das in der Fig. 4 links liegende Ende der Rotorwelle 81 ist überdies mit einem axialen, mit einer Außenverzahnung 83′ geformten Ansatz versehen, der als Sonnenrad der ersten Stufe eines Planetengetriebes 31 ausgebildet ist.

Dieses Planetengetriebe ist wie bei der ersten Ausführungsform der Fig. 3 als dreistufiges Planetengetriebe ausgebildet, wobei die ersten beiden Stufen in gleicher Weise wie bei der Ausführung der Fig. 3 ausgebildet sind und ausschließlich der Untersetzung der Drehzahl der Elektromotoranordnung dienen. Die dritte Stufe dieses Planetengetriebes 31′ ist ebenfalls wie bei der Ausführungsform der Fig. 3 mit besonderer Funktion, wie erläutert, ausgestattet.

Das in der Fig. 4 links gelegene axiale Ende des Führungskörpers 9′ ist mittels der Wälzlager 92′ auf einem über den Vierkant 74′ drehfest mit der Basis verbindbaren Lagerzapfen 16′ gelagert. Die Lagerung des Führungskörpers auf diesem Lagerzapfen 16′ einerseits und der Außenseite des Statorgehäuses 85′ andererseits ist derart ausgebildet, daß die Drehachse des Führungskörpers 9′ exzentrisch bezüglich seiner kreiszylindrischen Außenumfangsoberflächenbereiche liegt, auf denen die Antriebsrolle 1′ drehbar gelagert ist.

Hervorzuheben ist bei dieser Ausführungsform, daß zwar keine gesonderte Bremse 7 wie bei der ersten Ausführungsform erforderlich ist, daß jedoch aufgrund der Tatsache, daß der Stator der Elektromotoranordnung 8′ starr und drehfest mit der Basis 2′ verbunden ist, diese Elektromotoranordnung 8′ exzentrisch in dem Führungskörper 9′ angeordnet sein muß, so daß bei gegebenen Außenabmessungen der Antriebsrolle 1′ für diese Elektromotoranordnung 8′ ein geringerer Raum zur Verfügung steht, als bei der Ausführungsform gemäß Fig. 3.

## Patentansprüche

1. Antriebsrolleneinheit zum Antrieb von Gegenständen auf einer Förderbahn, mit einer von einer Elektromotoranordnung (8, 8′) über eine Zahnrad-Innenzahnkranz-Getriebeübertragung (21,22,12) drehend antreibbaren Antriebsrolle (1, 1′), welche drehbar auf einem Führungskörper (9, 9′) gelagert ist, mittels dem sie bezüglich einer Basis (2, 2′) zwischen einer unteren Ruhestellung und einer oberen Antriebsstellung, in der sie mit der Unterseite des anzutreibenden Gegenstands im Eingriff steht, bewegbar ist, wobei die Antriebsrolle (1, 1′) im wesentlichen als hohler Kreiszylinder ausgebildet ist und die Elektromotoranordnung (8, 8′), der Führungskörper (9, 9′) und die Getriebeübertragung im Inneren der hohlzylindrischen Antriebsrolle (1, 1′) angeordnet sind, wobei ferner der Führungskörper (9, 9′) kreiszylindrische Außenumfangsflächenbereiche aufweist, auf denen die Antriebsrolle (1, 1′) konzentrisch gelagert ist, wobei an der Innenseite der hohlzylindrischen Antriebsrolle (1, 1′) ein zu ihr konzentrischer Innenzahnkranz (12, 12′) drehfest angebracht ist, und wobei der Führungskörper (9, 9′) um eine bezüglich der Basis (2, 2′) ortsfeste, zu seinen kreiszylindrischen Außenumfangsflächenbereichen exzentrische Drehachse drehbar gelagert ist, dadurch **gekennzeichnet,** daß der Innenzahnkranz (12, 12′) der Antriebsrolle (1, 1′) als das Kronenrad eines Planetengetriebes (20, 20′) ausgebildet ist, daß ein Planetenrad (22, 22′) des Planetengetriebes (20, 20′) einerseits mit dem Innenzahnkranz (12, 12′) und andererseits mit einem von der Elektromotoranordnung (8, 8′) angetriebenen Sonnenrad (21, 21′) des Planetengetriebes (20, 20′) kämmt, und daß der Planetenträger dieses Planetenrads (22, 22′) fest mit dem Führungskörper (9, 9′) verbunden ist.

2. Antriebsrolleneinheit nach Anspruch 1, dadurch **gekennzeichnet,** daß der Stator (82) der innerhalb des als Hohlkörper ausgebildeten Führungskörpers (9) angeordneten Elektromotoranordnung (8) fest mit dem Führungskörper (9) verbunden ist.

3. Antriebsrolleneinheit nach Anspruch 2, dadurch **gekennzeichnet,** daß der Rotor (80) und der Stator (82) der Elektromotoranordnung (8) konzentrisch zueinander und konzentrisch zu den kreiszylindrischen Außenumfangsflächenbereichen des Führungskörpers (9) angeordnet sind.

4. Antriebsrolleneinheit nach Anspruch 2 oder 3, dadurch **gekennzeichnet,** daß die Drehung der Antriebsrolle (1) mittels einer Bremse (7) bezüglich der Basis (2) mit einem definierten Bremsmoment abgebremst ist.

5. Antriebsrolleneinheit nach Anspruch 4, dadurch **gekennzeichnet,** daß die Bremse (7) als Rollenreibungsbremse ausgebildet ist, die zwischen einem mit dem Innenzahnkranz (12) der Antriebsrolle (1) kämmenden Zahnrad (55) und einem drehfest mit der Basis (2) verbundenen, zur Drehachse des Führungskörpers (9) konzentrischen Lagerzapfen (17) angreift.

6. Antriebsrolleneinheit nach Anspruch 1, dadurch **gekennzeichnet,** daß der Stator (82′) der innerhalb des als Hohlkörper ausgebildeten Führungskörpers (9′) angeordneten Elektromotoranordnung (8′) fest mit der Basis (2′) verbunden ist, und daß der Führungskörper (9′) auf dem Stator (82′) drehbar gelagert ist.

7. Antriebsrolleneinheit nach Anspruch 6, dadurch **gekennzeichnet,** daß der Rotor (80′) und der Stator (82′) der Elektromotoranordnung (8′) konzentrisch zueinander und zur Drehachse des Führungskörpers (9′), jedoch entsprechend exzentrisch zu den kreiszylindrischen Außenumfangsflächen des Führungskörpers (9′) angeordnet sind.

8. Antriebsrolleneinheit nach einem der vorhergehenden Ansprüche, dadurch **gekennzeichnet,** daß der Planetenträger des Planetenrads (22, 22′) einstückig mit dem Führungskörper (9, 9′) ausgebildet ist.

## Claims

1. Driving-roll device for driving objects on a conveyor path, comprising a driving roll (1, 1') adapted to be driven for rotation by an electric motor system (8, 8') via a gear - internal ring gear transmission system (21, 22, 12), which roll is supported for rotation on a guiding body (9, 9') by means of which it may be moved, relative to a base (2, 2'), between a lower rest position and an upper drive position in which it is engaged with the underside of said object to be driven, with said driving roll (1, 1') being configured substantially in the form of a hollow circular cylinder and with said electric motor system (8, 8'), said guiding body (9, 9') and said gear transmission system being disposed inside said hollow cylindrical driving roll (1, 1'), wherein moreover said guiding body (9, 9') presents circular cylindrical portions on the outer peripheral surfaces, on which said driving roll (1, 1') is concentrically supported, with an internal ring gear (12, 12'), which is concentric therewith, being mounted for rotation on the inside of said hollow cylindrical driving roll (1, 1'), and wherein said guiding body (9, 9') is supported for rotation about an axis of rotation which is stationary relative to said base (2, 2') and eccentric relative to its circular cylindrical portions on the outer periphery, **characterized in** that said internal ring gear (12, 12') of said driving roll (1, 1') is configured as the crown gear of a planetary gearing (20, 20'), that a planetary gear (22, 22') of said planetary gearing (20, 20') meshes, on the one hand, with said internal ring gear (12, 12') and, on the other hand, with a sun gear (21, 21') of said planetary gearing (20, 20'), which is driven by said electric motor system (8, 8'), and that the planet carrier of this planetary gear (22, 22') is fixedly secured on said guiding body (9, 9').

2. Driving-roll device according to Claim 1, **characterized in** that the stator (82) of said electric motor system (8) which is disposed inside said guiding body (9) configured as a hollow body, is fixedly connected to said guiding body (9).

3. Driving-roll device according to Claim 2, **characterized in** that the rotor (80) and the stator (82) of said electric motor system (8) are disposed in concentric relationship both mutual and in relation to said circular cylindrical surface portions on the outer periphery of said guiding body (9).

4. Driving-roll device according to Claim 2 or 3, **characterized in** that the rotation of said driving roll (1) is decelerated by means of a brake (7) relative to said base (2) at a defined braking moment.

5. Driving-roll device according to Claim 4, **characterized in** that said brake (7) is configured as a roll friction brake which is effective between a gear (55) meshing with said internal ring gear (12) of said driving roll (1) and a journal (17) connected for rotation to said base (2) and concentric relative to the axis of rotation of said guiding body (9).

6. Driving-roll device according to Claim 1, **characterized in** that said stator (82') of said electric motor system (8') disposed inside said guiding body (9') which is configured as hollow body, is fixedly connected to said base (2'), and that said guiding body (9') is supported for rotation on said stator (82').

7. Driving-roll device according to Claim 6, **characterized in** that said rotor (80') and said stator (82') of said electric motor system (8') are disposed in mutual concentric relationship and concentrically with the axis of rotation of said guiding body (9'), however, with an appropriate eccentricity relative to said circular cylindrical surfaces on the outer periphery of said guiding body (9').

8. Driving-roll device according to any of the preceding claims, **characterized in** that said planet carrier of said planetary gear (22, 22') is made to be integral with said guiding body (9, 9').

## Revendications

1. Unité à rouleau moteur pour l'avancement des objets sur un chemin de transport, comprenant un rouleau moteur (1, 1') commandable en rotation moyennant un système de moteur électrique (8, 8') par un train de transmission à roue dentée - couronne à denture intérieure (21, 22, 12), lequel rouleau est logé à tourner sur un corps guide (9, 9') au moyen duquel il est mobile, relativement à une base (2, 2') entre une position de repos inférieure et une position d'entraînement supérieure, à laquelle il se trouve en prise avec la face inférieure de l'objet à avancer, ledit rouleau moteur (1, 1') étant configuré en général sous forme d'un cylindre circulaire creux et ledit système de moteur électrique (8, 8') , ledit corps guide (9, 9') et ladite transmission étant agencés à à l'intérieur dudit rouleau moteur cylindrique creux (1, 1'), dans laquelle unité ledit corps guide (9, 9') présente de plus des parties à surface cylindrique circulaire à son périmètre extérieur, sur lesquelles est logé, à position concentrique, ledit rouleau moteur (1, 1'), une couronne à denture intérieure, y concentrique, étant disposée à rotation à la face intérieure dudit rouleau moteur cylindrique creux (1, 1'), et ledit corps guide (9, 9') étant logé à tourner autour d'un axe de révolution excentrique relativement auxdites parties au périmètre extérieur dudit corps guide, qui est stationnaire relativement à ladite base (2, 2'), **caractérisée en ce** que ladite couronne à denture intérieure (12, 12') dudit rouleau moteur (1, 1') est configurée comme roue de chant d'un engrenage planétaire (20, 20') de façon qu'un satellite (22, 22') dudit engrenage planétaire se trouve en prise, d'un côté, dans ladite couronne à denture intérieure (12, 12') et, d'autre côté, dans une roue solaire (21, 21') dudit engrenage planétaire (20, 20'), qui est entraînée par ledit système de moteur électrique (8, 8'), et que la cage de transmission planétaire dudit satellite (22, 22') est solidarisée avec ledit corps guide (9, 9').

2. Unité à rouleau moteur selon la revendication 1, **caractérisée en ce** que le stator (82) dudit système de moteur électrique (8), qui est disposé à l'intérieur dudit corps guide (9) configuré comme élément creux, est solidarisé avec ledit corps guide (9).

3. Unité à rouleau moteur selon la revendication 2, **caractérisée en ce** que le rotor (80) et ledit stator (82) dudit système de moteur électrique (8) sont disposés à être concentrique l'un à l'autre et auxdites parties à surface cylindrique circulaire au périmètre extérieur dudit corps guide (9).

4. Unité à rouleau moteur selon la revendication 2 ou 3, **caractérisée en** ce que la rotation dudit rouleau moteur (1) est freinée, relativement à ladite base (2) et moyennant un frein (7), à un couple de freinage défini.

5. Unité à rouleau moteur selon la revendication 4, **caractérisée en ce** que ledit frein (7) a la configuration d'un frein à friction de rouleaux, qui agit entre une roue d'engrenage (55) en prise dans ladite couronne à denture intérieure (12 dudit rouleau moteur et un tourillon (17) concentrique à l'axe de révolution dudit corps guide (9), qui est fixé à rotation avec ladite base (2).

6. Unité à rouleau moteur selon la revendication 1, **caractérisée en ce** que ledit stator (82') dudit système de moteur électrique (8'), qui est disposé à l'intérieur dudit corps guide (9') sous forme d'un élément creux, est solidarisé avec ladite base (2'), et en ce que ledit corps guide (9') est logé sur ledit stator (82') pour y tourner.

7. Unité à rouleau moteur selon la revendication 6, **caractérisée en ce** que ledit rotor (80') et ledit stator (82') dudit système de moteur électrique (8') sont disposés à être concentrique l'un à l'autre et relativement audit axe de révolution dudit corps guide (9'), à une excentricité appropriée, cependant, relativement aux surfaces cylindriques circulaires au périmètre extérieur dudit corps guide (9').

8. Unité à rouleau moteur selon une quelconque des revendications précédentes, **caractérisée en ce** que ladite cage de transmission planétaire de ladite couronne à denture intérieure (22, 22') est ledit corps guide (9, 9') sont faits d'une seule partie.
